Europäisches Patentamt

European Patent Office

Office européen des brevets

(19)

(11) Veröffentlichungsnummer: **0 247 242**
**B1**

(12) **EUROPÄISCHE PATENTSCHRIFT**

(45) Veröffentlichungstag der Patentschrift:
04.07.90

(51) Int. Cl.⁵: **B01D 25/12**

(21) Anmeldenummer: **86117821.8**

(22) Anmeldetag: **20.12.86**

(54) **Plattenfilterpresse.**

(30) Priorität: **16.05.86  DE 3616624**

(43) Veröffentlichungstag der Anmeldung:
**02.12.87 Patentblatt 87/49**

(45) Bekanntmachung des Hinweises auf die Patenterteilung:
**04.07.90 Patentblatt 90/27**

(84) Benannte Vertragsstaaten:
**CH DE FR GB IT LI**

(56) Entgegenhaltungen:
**DE-B- 1 200 258**
**FR-A- 1 335 850**
**GB-A- 800 724**
**US-A- 3 347 384**

(73) Patentinhaber: **PASSAVANT-WERKE AG,**
**D-6209 Aarbergen 7(DE)**

(72) Erfinder: **Fresenius, Jürgen, Dipl.-Ing., An der**
**Schmalmach 26, D-6208 Bad Schwalbach(DE)**
Erfinder: **Rosswurm, Rolf, Dipl.-Ing., Aarstrasse 29,**
**D-6209 Aarbergen 3(DE)**

## Beschreibung

Die Erfindung betrifft eine Plattenfilterpresse mit einer Vielzahl von an horizontalen Führungsträgern verschiebbar aufgehängten Filterplatten.

Derartige Filterpressen dienen der Entwässerung von Schlämmen, z.B. Abwasser- oder Kohleschlämmen. Zum Abwurf des sich in den Filterkammern bildenden Filterkuchens werden die Filterplatten nacheinander geöffnet, so daß der Filterkuchen herausfallen kann.

Die Filterplatten sind mittig oben oder seitlich etwa in halber Höhe aufgehängt; beim Öffnen durch kontinuierlich umlaufende Mitnehmerketten oder oszillierende Verschiebeorgane, die nicht in der Schwerpunktebene angreifen, werden die Platten praktisch in Bruchteilen einer Sekunde auf die Verschiebegeschwindigkeit beschleunigt. Dies führt dazu, daß auf die Platten ein Trägheits-Kippmoment wirkt, wodurch sie zuerst nach hinten und dann nach vorne pendeln; sie schlagen dabei oft an die vorige Platte und beschädigen das Filtertuch. Auch sind die Pendelbewegungen, die durch das Herausfallen des Filterkuchens selbst entstehen, unkontrolliert und daher unerwünscht. Bei Filterpressen, deren Platten nicht an Rollen, sondern an Gleitstücken angehängt sind, tritt ein weiteres Problem auf, das noch nicht zufriedenstellend gelöst ist. Durch die Gleitreibung an der Aufhängung bleiben die Platten nämlich beim Verschieben des ganzen Plattenpakets an der Gleitführung zurück, so daß sie sich gegeneinander versetzt schief stellen. Soll dieses Paket dann unter dem Schließdruck für die nächste Filtercharge geschlossen werden, dann können sich die Platten wegen der hohen gegenseitigen Reibung nicht mehr gerade stellen. Dabei werden nicht nur die Filtertücher zusätzlich auf Zug beansprucht; durch den exzentrischen Kraftangriff kommt es auch zu Zwängungen im Pressengestell und in den Schließzylindern. Ein Pressenhersteller hat dieses Problem dadurch zu lösen versucht, daß die Gleitstücke der Platten mit einer Dauerschmierung versehen werden (DE-OS 3 345 742). Eine solche mit der Plattenverfahrvorrichtung gekoppelte Schmiereinrichtung ist jedoch äußerst kompliziert, weil die Schmierleitungen um die Führungsträger für die Platten herumgelegt werden müssen. Abgesehen davon, daß die Funktionstüchtigkeit der Schmiereinrichtung bei rauhem Betrieb in Frage gestellt ist, stellt sich keine Lösung des ursächlichen Problems dar: die Reibung wird zwar verringert, aber nicht beseitigt. Es wird also nach wie vor zum Schiefstellen der Platten kommen.

Einen anderen Weg stellen die sog. Pendelsicherungen dar. Dies sind zusätzliche Arme an den Platten, die sich mit Rollen oder Gleitstücken gegen Anschlagleisten abstützen. Bei einer bekannten Ausführungsform (DE-PS 1 109 647) sind an jeder Platte zwei Pendelsicherungen vorgesehen, von denen die eine in und die andere entgegen der Verschieberichtung verläuft. Bei einer anderen bekannten Presse (DE-OS 2 645 964) sind die Doppelsicherungen in einem Arm zusammengelegt, dessen Rolle mit einer oberen und einer unteren Anschlagseite zusammenwirkt.

Eine solche Pendelsicherung ist zwar z.B. beim Abspritzen der Filtertücher von Vorteil, weil es dort auf die genaue Einhaltung des Abstandes zwischen Düsenrohr und Filtertuch ankommt. Die absolut pendelfreie Führung läßt aber außer acht, daß dann beim Auseinanderziehen der Platten zwischen klebrigem Filterkuchen und Filtertuch hohe Haftkräfte herrschen. Wenn sich der Filterkuchen ganzflächig löst, treten unkontrollierbare Kräfte und Bewegungen auf. Es bestand die Aufgabe, die Pendelsicherung so zu modifizieren, daß ein ruckfreies Ablösen des Filterkuchens erreicht, und trotzdem ein kippmomentfreies Verschieben der Platten insbesondere beim Schließvorgang und während des Abspritzvorgangs ermöglicht wird. Die Lösung dieser Aufgabe besteht gemäß der Erfindung darin, daß nur einseitige Längspendelsicherungen vorgesehen sind, die ein Pendeln der Platten in Öffnungsrichtung zulassen. Diese einseitige freie Pendelmöglichkeit hat zur Folge, daß die im Stapel nachfolgende Filterplatte sich schräg stellen kann, so daß sich der Filterkuchen von oben nach unten ablösen kann. Die Abreißkräfte sind dadurch wesentlich verringert. Die abgezogene Platte hingegen kann nicht pendeln, wird also ruhig hängend zum anderen Stapel verfahren, und auch beim Abspritzen bleibt die Platte ruhig in der Abspritzposition hängen.

Grundsätzlich sind zwei Arten von einseitigen Pendelsicherungen möglich; entweder weist ein schräger Arm nach oben in die Öffnungsrichtung und wirkt von oben auf eine obere Anschlagleiste, oder der Arm weist in die andere Richtung und legt sich unten gegen eine untere Anschlagleiste. Die Anschlagstücke an den Schrägarmen können als Rollen ausgebildet sein; vorzugsweise werden jedoch exzentrisch gebohrte Rundstücke verwendet, die durch Drehen auf das notwendige kleine Spiel eingestellt werden können, in dem sie normalerweise die Anschlagleiste nicht berühren. Die Rollen können exzentrisch gelagert werden, so daß sie sich ebenfalls auf das gewünschte Spiel einstellen lassen.

In der Zeichnung sind die zwei obengenannten Ausführungsformen in der Seitenansicht beim Verschiebevorgang dargestellt.

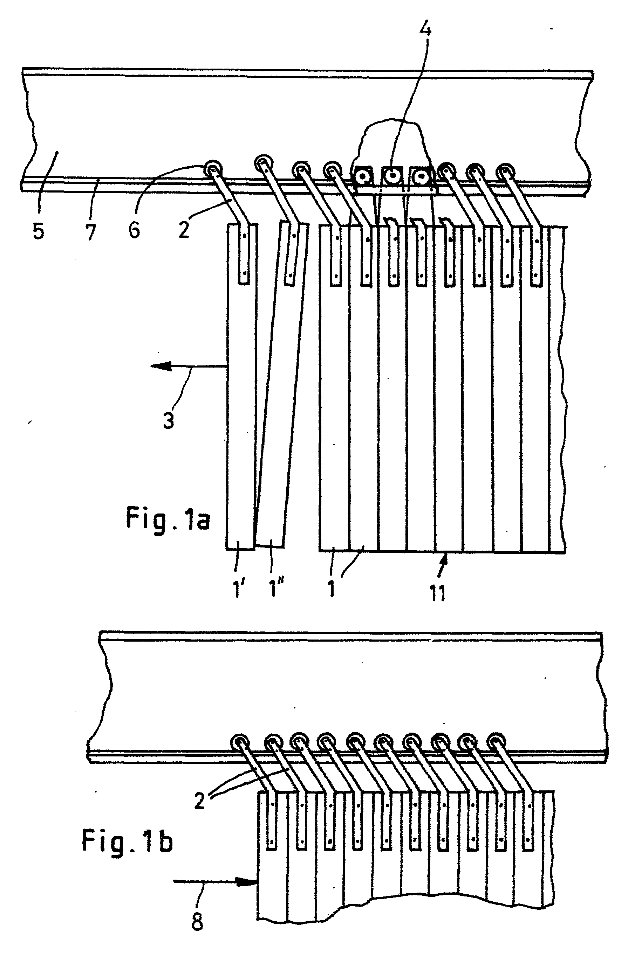

Bei der Ausführungsform nach Fig. 1a und 1b weisen die an den Stirnkanten der Filterplatten 1 befestigten, gekröpften Arme 2 in Öffnungsrichtung 3, während die Aufhängung 4 der Platten auf den Längsführungen 5 vertikal verläuft. An den Enden der Arme 2 sind Gleitstücke 6 befestigt, die sich von oben auf an den Längsträgern 5 befestigte Anschlagleisten 7 abstützen, die vom Plattenstapel 11 gerade abgezogene vorderste Filterplatte 1' bleibt infolge der Pendelsicherung lotrecht, während sich die nachfolgende, noch am Stapel gehaltene Platte 1" schräg stellen kann, so daß der Filterkuchen sich allmählich von oben nach unten ablöst und dann in dem von der in die Lotrechte zurückpendelnden Platte 1" freigegebenen Zwischenraum nach unten fällt. Beim Zusammenschieben (8) nach Fig. 1b verhindern die dann nachlaufenden Pendelsicherungen 2, daß sich die Platten schräg stellen.

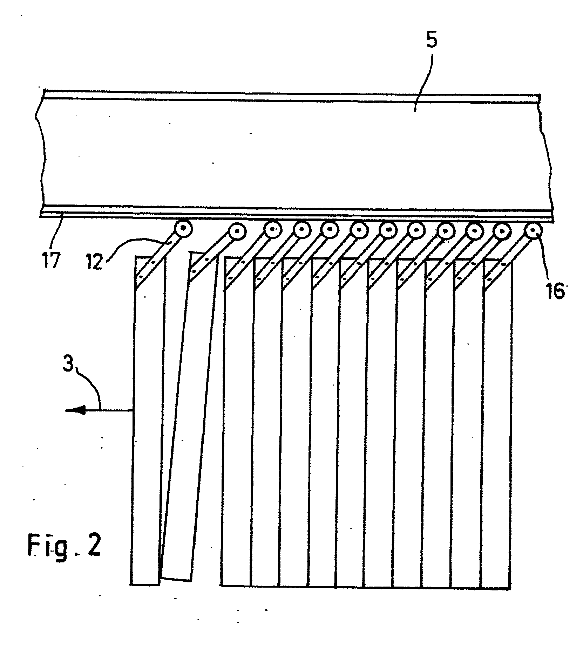

Bei der Bauform nach Fig. 2 liegen die Pendelsicherungen 12 in Öffnungsrichtung 3 gesehen hinter den Platten, ihre Gleitstücke 16 wirken mit einer von unten an dem Längsholm 5 befestigten Anschlagleiste 17 zusammen.

Bei seitlich geführten Filterplatten können die Platten um die Verbindungsachse der beiden Auflagepunkte pendeln. Gemäß der Erfindung wird dies ebenfalls durch einseitig schräg nach oben abstehende Arme mit Gleitstücken verhindert, die sich auf den unteren Flanschen der I-Träger abstützen.

## Patentansprüche

1. Plattenfilterpresse mit einer Vielzahl von an horizontalen Führungsträgern verschiebbar aufgehängten Filterplatten, die mit gegen horizontale Anschlagleisten wirksamen Längspendelsicherungen versehen sind, dadurch gekennzeichnet, daß nur einseitige Pendelsicherungen (2, 12) vorgesehen sind, die ein Pendeln der Filterplatten (1) in Öffnungsrichtung (3) der Presse zulassen.

2. Plattenfilterpresse nach Anspruch 2, dadurch gekennzeichnet, daß die Längspendelsicherungen als sich schräg nach oben in Öffnungsrichtung erstreckende Arme (2) ausgebildet sind, an deren freiem Ende von oben gegen obere Anschlagleisten (7) wirkende Gleitstücke (6) angeordnet sind.

3. Plattenfilterpresse nach Anspruch 1, dadurch gekennzeichnet, daß die Längspendelsicherungen als sich entgegen der Öffnungsrichtung erstreckende Arme (12) ausgebildet sind, an deren freiem Ende von unten gegen untere Anschlagleisten (17) wirkende Gleitstücke (16) angeordnet sind.

4. Plattenfilterpresse nach Anspruch 2 oder 3, dadurch gekennzeichnet, daß die Gleitstücke als Rollen ausgebildet sind.

5. Plattenfilterpresse nach Anspruch 2 oder 3, dadurch gekennzeichnet, daß die Gleitstücke als exzentrisch gebohrte Rundstücke oder exzentrisch gelagerte Rollen ausgebildet sind.

6. Plattenfilterpresse nach Anspruch 2 bis 5, dadurch gekennzeichnet, daß die Arme aus zwei gekröpften Abschnitten bestehen, von denen der eine, vertikal verlaufende zur Befestigung an den seitlichen Stirnflächen der Filterplatten (1) dient und der andere das mit der Anschlagleiste (7) zusammenwirkende Gleitstück (6) bzw. die Rolle trägt.

7. Plattenfilterpresse nach Anspruch 2 bis 6, dadurch gekennzeichnet, daß die Anschlagleisten (9, 17) aus gleitfreundlichem Kunststoff oder korrosionsbeständigem Stahl bestehen.

## Claims

1. Plate filter press with a multitude of filter plates which are movable suspended from horizontal beams and which are equipped with safety devices against longitudinal pendulum movement, the latter being effective when pushing against the shoulders characterized in that the safety devices (2, 12) are only provided on one side and, therefore, allow a pendulum movement of the filter plates (1) in the opening direction (3) of the filter press.

2. Plate filter press as claimed in claim 2 in which the safety devices against longitudinal pendulum movement are formed as arms (2) being inclined upwards in the opening direction and which are provided at their free end with slide blocks (6) pushing from above against upper shoulders (7).

3. Plate filter press as claimed in claim 1 in which the safety devices against longitudinal pendulum movement are formed as arms (12) extending opposite of the opening direction which are provided at their free end with slide blocks (16) pushing from below against lower shoulders (17).

4. Plate filter press as claimed in claim 2 or 3 in which the slide blocks are pulleys.

5. Plate filter press as claimed in claim 2 or 3 in which the slide blocks are round bodies with eccentrical boring or eccentric pulleys.

6. Plate filter press as claimed in claim 1 to 5 in which the arms consist of two S-shaped parts of which the vertical one will be attached to the lateral front of the filter plate (1) and the other one carries the slide block (6) pushing against the shoulder (7) or the pulley.

7. Plate filter press as claimed in claim 2 to 6 in which the shoulders (7, 17) are made either of plastic with good sliding capacity or of corrosion resistant steel.

## Revendications

1. Filtre-presse à plaques avec une multitude de plaques de filtration suspendues des longerons horizontaux de manière coulissable, et munies des dispositifs agissant contre des butées horizontales évitant ainsi l'oscillation pendulaire en longueur, caractérisé en ce que les dispositifs d'arrêt de l'oscillation pendulaire (2, 12) sont prévus seulement à un côté permettant un mouvement pendulaire des plaques de filtrations (1) dans le sens d'ouverture (3) du filtre-presse.

2. Filtre-presse à plaques selon revendication 2, caractérisé en ce que les dispositifs d'arrêt de l'oscillation pendulaire en longueur sont formés comme des bras (2) étant inclinés vers le haut dans le sens d'ouverture, et lesquels sont munis à leur extrémité libre des corps coulissants (6) agissant de haut contre des butées supérieures (7).

3. Filtre-presse à plaques selon revendication 1, caractérisé en ce que les dispositifs d'arrêt de l'oscillation pendulaire en longueur sont formés comme des bras (12) s'étendant vers le bas en sens inverse de la direction d'ouverture, et lesquels sont munis à leur extrémité libre des corps coulissants (16) agissant de bas contre des butées inférieures (17).

4. Filtre-presse à plaques selon revendication 2 ou 3, caractérisé en ce que les corps coulissants sont des rouleaux.

5. Filtre-presse à plaques selon revendication 2 ou 3, caractérisé en ce que les corps coulissants sont formés comme des pièces rondes avec alésage excentrique ou comme des rouleaux montés excentriquement.

6. Filtre-presse à plaques selon revendication 1 jusqu'à 5, caractérisé en ce que les bras sont composés de deux segments coudés dont le segment vertical sera fixé à la face latérale des plaques de filtration (1) et l'autre segment sert à supporter le corps coulissant (6) agissant contre la butée (7) ou bien le rouleau.

7. Filtre-presse à plaques selon revendication 2 jusqu'à 6, caractérisé en ce que les butées (7, 17) sont fabriquées de matière plastique ayant une bonne capacité de glissement ou d'acier résistant à la corrosion.

Fig.1a

1' 1" 1 11

Fig.1b

5

17  12

16

3

Fig. 2